# EUROPÄISCHE PATENTSCHRIFT

(11) **EP 4 065 325 B1**
(45) Veröffentlichungstag und Bekanntmachung des Hinweises auf die Patenterteilung: **08.04.2026**
(21) Anmeldenummer: 20792635.3
(22) Anmeldetag: 14.10.2020
(51) Int. Cl.: B27G 15/00

(54) **HOLZBOHRER**
WOOD DRILL
FRAISE À BOIS

(30) Priorität: 27.11.2019 DE 102019218341; 28.11.2019 DE 102019218421
(43) Veröffentlichungstag der Anmeldung: 05.10.2022
(73) Patentinhaber: Robert Bosch GmbH, 70442 Stuttgart (DE)
(72) Erfinder: CHRISTEN, Stefan, 4513 Langendorf (CH); KAESER, Lorenz, 4522 Rüttenen (CH)
(86) Internationale Anmeldenummer: PCT/EP2020/078957
(87) Internationale Veröffentlichungsnummer: WO 2021/104741

(56) Entgegenhaltungen:
- EP-A1- 2 217 417
- WO-A1-2020/092462
- DE-A1- 10 007 736
- DE-A1- 10 152 295
- DE-A1- 102010 024 391
- DE-U1- 29 911 945
- GB-A- 133 494
- GB-A- 2 405 820
- JP-A- 2006 082 420
- US-A- 1 483 082
- US-A1- 2013 189 044
- US-A1- 2020 316 694

## Beschreibung

### Stand der Technik

Die vorliegende Erfindung betrifft einen Holzbohrer mit einem Spannabschnitt zur drehfesten Verbindung mit einer Werkzeugaufnahme einer Handwerkzeugmaschine, sowie einem Kopfabschnitt, der mit einer Zentriergeometrie versehen ist, wobei der Spannabschnitt an einem werkstückabgewandten ersten Ende und der Kopfabschnitt an einem werkstückzugewandten zweiten Ende des Holzbohrers ausgebildet ist, wobei der Spannabschnitt über einen Schaftabschnitt mit dem Kopfabschnitt verbunden ist, und wobei ein maximaler Außenradius des Kopfabschnitts größer als ein maximaler Außenradius des Schaftabschnitts ist, wobei der Kopfabschnitt mindestens eine Hauptschneide mit mindestens zwei Stufen zum Einbringen einer Bohrung mit einem vorgegebenen Innenradius in ein Werkstück aufweist, und ein Außenradius einer Hauptschneidebasis weniger als 60 %eines Außenradius des Kopfabschnitts beträgt. Ein solcher Holzbohrer ist aus dem Dokument EP 2 217 417 A1 bekannt.

Aus dem Stand der Technik sind Holzbohrer in einer großen Variationsbreite bekannt. Hiermit lassen sich Bohrungen mit hoher Maßhaltigkeit in Holz oder holzähnliche Werkstücke einbringen. Vielfach sind in derartigen Werkstücken jedoch metallische Objekte, wie zum Beispiel Verbindungs- und/oder Befestigungselemente in der Form von Nägeln, Schrauben oder Klammern, vorhanden. Tritt der Holzbohrer mit diesen metallischen Objekten beim Einbringen einer Bohrung in Kontakt, führt dies zu einem hohen Verschleiß an den Schneidkanten und einer damit einhergehenden beträchtlichen Verringerung der Standzeit.

Aus der EP 2 217 417 B1 ist ein Schneckenbohrer mit einer Reibe bekannt. Dieser vorbekannte Bohrer kann zumindest beim Bohren in Holz mit langsamer Drehzahl und mit hohem Drehmoment eine große Anzahl von Metallnägeln durchtrennen, ohne dass ein nennenswertes Absinken der Bohrleistung durch das Abstumpfen der Hauptschneidkanten eintritt.

### Offenbarung der Erfindung

Die vorliegende Erfindung betrifft einen Holzbohrer mit einem Spannabschnitt zur drehfesten Verbindung mit einer Werkzeugaufnahme einer Handwerkzeugmaschine, sowie mit einem Kopfabschnitt, der mit einer Zentriergeometrie versehen ist. Der Spannabschnitt ist an einem werkstückabgewandten ersten Ende und der Kopfabschnitt an einem werkstückzugewandten zweiten Ende des Holzbohrers ausgebildet, wobei der Spannabschnitt über einen Schaftabschnitt mit dem Kopfabschnitt verbunden ist, und wobei ein maximaler Außenradius des Kopfabschnitts größer als ein maximaler Außenradius des Schaftabschnitts ist. Der Kopfabschnitt weist mindestens eine Hauptschneide mit mindestens zwei Stufen auf. Gemäß einer Ausführungsform dient der Kopfabschnitt zum Einbringen einer Bohrung mit einem vorgegebenen Innenradius in ein Werkstück, wobei ein Außenradius einer Hauptschneidebasis weniger als 60 %, bevorzugt weniger als 50 %, eines Außenradius des Kopfabschnitts beträgt.

Aufgrund der vorzugsweise mehrfach axial zurückspringend gestuften Ausführung der mindestens einen Hauptschneide des Holzbohrers werden z.B. innerhalb des Werkstücks befindliche Metallkörper stückweise durchtrennt, woraus ein beträchtlich geringerer Verschleiß der Hauptschneide resultiert. Der Holzbohrer kann auch bei hoher Drehzahl und nicht nur in einem Drehmomentmodus einer Handwerkzeugmaschine bei reduzierter Drehzahl und hohem Drehmoment etwaige Metallkörper problemlos durchtrennen. Durch die Dimensionierung der Hauptstufe ist zudem eine Begrenzung des notwendigen Antriebsdrehmoments des Holzbohrers beim Durchtrennen von metallischen Objekten gegeben. Der Holzbohrer ist bevorzugt zum Bohren in Holz und in anderen, vergleichbar weichen Werkstoffen, wie Kunststoff etc., vorgesehen. Eine axiale Gesamtlänge des Holzbohrers kann vorzugsweise bis zu 600 mm bei einem Durchmesser zwischen bevorzugt 6 mm und 35 mm betragen.

Bevorzugt weist der Kopfabschnitt eine spiralförmig gewendelte Oberflächengeometrie mit mindestens einer Spänenut und mit mindestens einer Nebenschneide auf.

Aufgrund der spiralförmig gewendelten Oberflächengeometrie ist ein problemloser Heraustransport der beim Bohren entstehenden Späne gewährleistet. Durch die Nebenschneiden ist eine im Wesentlichen glatte Innenwand einer mittels des Holzbohrers in das Werkstück einzubringenden Bohrung gewährleistet.

Vorzugsweise springen die mindestens zwei Stufen der mindestens einen Hauptschneide in Bezug zu der radial innenliegenden Hauptschneidebasis jeweils um eine Stufenhöhe axial in Richtung des zweiten Endes des Holzbohrers zurück.

Infolgedessen trennt die Hauptschneide ein Metallobjekt stückweise in Metallfragmente und muss das Metallobjekt somit nicht vollständig über seine Quererstreckung hinweg in Bezug zur Längsmittelachse abtragen.

Bei einer technisch vorteilhaften Weiterbildung weist jede der mindestens zwei Stufen der Hauptschneide eine radiale Stufenbreite auf.

Aufgrund der in Bezug zu der mindestens einen, jeweils radial weiter außenliegenden Stufe einer Hauptschneide, ergeben sich verbesserte Schneidergebnisse in Holz, das mit Metallkörpern wie Nägeln, Schrauben, Klammern etc. durchsetzt ist.

Gemäß einer günstigen Ausgestaltung liegt die radiale Stufenbreite zwischen 1 mm und 10 mm, vorzugsweise zwischen 2 mm und 5 mm.

Aufgrund dieser beispielhaften Ausgestaltung ergeben sich verbesserte Arbeitsergebnisse.

Bevorzugt ist jede Stufenbasis der mindestens zwei Stufen jeweils um einen Stufenwinkel senkrecht zur Längsmittelachse in Richtung des ersten Endes des Holzbohrers geneigt.

Hierdurch ergibt sich auf einfache Art und Weise eine verbesserte Durchtrennung eines etwaig im Werkstück vorhandenen Metallkörpers. Die Stufenwände der Stufen laufen jeweils im Wesentlichen parallel zu der Längsmittelachse des Holzbohrers.

Vorzugsweise liegt der Stufenwinkel zwischen 0° und 65°, bevorzugt bei etwa 40°.

Infolgedessen ergeben sich leicht und unkompliziert verbesserte Arbeitsergebnisse beim Einsatz des Holzbohrers.

Gemäß einer weiteren Ausgestaltung besteht zwischen der mindestens einen Hauptschneide und senkrecht zur Längsmittelachse ein Profilwinkel, der zwischen 10° und 30° beträgt. Für den Fall, dass der Schaftabschnitt abweichend von einer zylindrischen Formgebung mit einer spiralförmigen Geometrie versehen ist, sollte der Profilwinkel größer als eine Steigung dieser dann spiralförmigen Schaftgeometrie sein. Besonders bevorzugt beträgt der Profilwinkel zwischen 15° und 25°.

Somit können sicher und zuverlässig verbesserte Schneidergebnisse erzielt werden.

Bevorzugt beträgt ein Keilwinkel der mindestens einen Hauptschneide ungefähr 60°.

Hierdurch kann die Bereitstellung einer robusten und widerstandsfähigen Schneidkante ermöglicht werden, wodurch sich die Standzeit des Holzbohrers vorzugsweise erhöhen kann.

Bevorzugterweise besteht zwischen der mindestens einen Spänenut und der Längsmittelachse ein Spanwinkel. Der Spanwinkel beträgt bevorzugt 15°.

Hierdurch ist ein verbessertes, sukzessives Durchtrennen der etwaig in einem hölzernen Werkstück befindlichen metallischen Fremdkörper gewährleistet. Weiterhin werden Späne sicher und zuverlässig aus dem herzustellenden Bohrloch herausbefördert.

Im Falle einer weiteren günstigen Ausgestaltung ist die Zentriergeometrie schraubenartig mit einem spiralförmig umlaufenden Gewinde mit einer Steigung ausgebildet.

Hierdurch kann sich der Holzbohrer nach dem Ansetzen an das Werkstück selbsttätig in dieses unter bevorzugt gleichzeitiger präziser Zentrierung hineinziehen.

Bevorzugt liegt die Steigung des Gewindes zwischen 1 mm und 2,5 mm.

Infolgedessen zieht sich der Holzbohrer nach dem Ansetzen leicht und schnell in das zu bohrende Werkstück hinein, wodurch eine präzise Zentrierung und eine maßhaltige Bohrung erzielbar sind.

Bevorzugt ist der Holzbohrer mit einem hochfesten Kohlenstoffstahl gebildet. Alternativ kann zumindest die Schneidkante mit einem Schnellarbeitsstahl (HSS) und/oder mit Wolframcarbid gebildet sein. Die Hauptschneide ist derart ausgelegt, dass eine Fertigung mittels üblicher spangebender Verfahren und/oder durch bekannte Warm- oder Kaltumformprozesse wie Schmieden, Biegen oder Stanzen möglich ist.

Infolgedessen ergibt sich eine vergleichsweise hohe Standzeit des Holzbohrers.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine Seitenansicht eines Holzbohrers,
- Fig. 2: eine um 90° um eine Längsmittelachse gedrehte Seitenansicht des Holzbohrers von Fig. 1,
- Fig. 3: eine Draufsicht auf den Holzbohrer von Fig. 2,
- Fig. 4: eine Teildraufsicht auf einen Kopfabschnitt des Holzbohrers von Fig. 2,
- Fig. 5: eine vergrößerte Teildraufsicht auf den Kopfabschnitt von Fig. 4, und
- Fig. 6: eine um 90° um die Längsmittelachse gedrehte Teildraufsicht auf den Kopfabschnitt von Fig. 5.

### Beschreibung der Ausführungsbeispiele

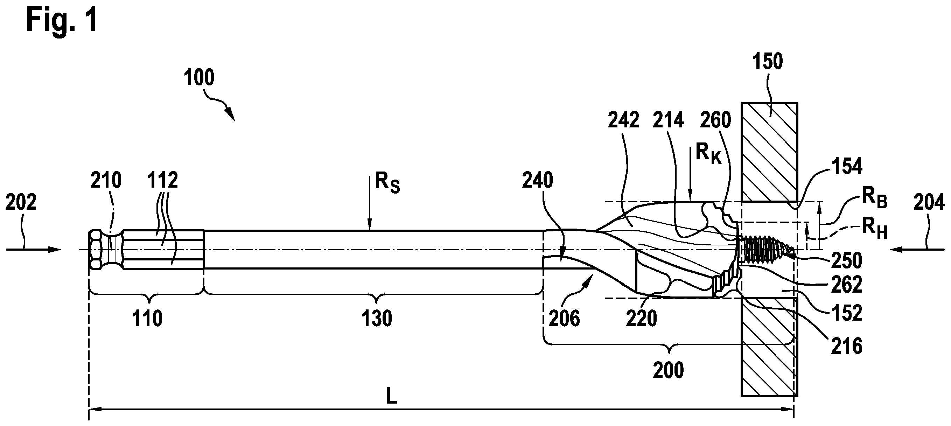

Fig. 1 zeigt einen Holzbohrer 100, der unter anderem einen Spannabschnitt 110 zur drehfesten Verbindung mit einer Werkzeugaufnahme einer nicht dargestellten Handwerkzeugmaschine, sowie einen Kopfabschnitt 200 mit einer Zentriergeometrie 250 umfasst. Zwischen dem Spannabschnitt 110 und dem Kopfabschnitt 200 verläuft ein hier vorzugsweise zylindrischer Schaftabschnitt 130. Der Holzbohrer 100 kann dabei als Holzspiralbohrer, Schneckenbohrer und/oder Schlangenbohrer ausgebildet sein.

Der hier lediglich exemplarisch sechs tangentiale Abflachungen aufweisende Spannabschnitt 110 ist an einem ersten Ende 202 und der Kopfabschnitt 200 mit der Zentriergeometrie 250 ist an einem hiervon abgewandten zweiten Ende 204 des Holzbohrers 100 ausgebildet. Es wird darauf hingewiesen, dass der Spannabschnitt 110 auch mehr oder weniger als sechs Abflachungen aufweisen kann. Des Weiteren kann der Spannabschnitt 110 auch als Rundschaft ausgebildet sein. Der Kopfabschnitt 200 weist illustrativ eine näherungsweise gewendelte Oberflächengeometrie 206 mit zwei um eine Längsmittelachse 210 spiralförmig gewendelten Spänenuten 240, 242 auf. Ein maximaler Radius R_{S} des Schaftabschnitts 130 ist hier beispielhaft deutlich kleiner als ein maximaler Außenradius R_{K} des Kopfabschnitts 200 des Holzbohrers 100 ausgebildet. Des Weiteren kann eine axiale Gesamtlänge L des Holzbohrers 100 bis zu 600 mm betragen.

Der Holzbohrer 100 ist bevorzugt rotationssymmetrisch zu der Längsmittelachse 210 ausgebildet. Der Kopfabschnitt 200 des Holzbohrers 100 verfügt hier exemplarisch über zwei einem Werkstück 150 zugewandte Hauptschneiden 214, 216, die in Bezug zur Längsmittelachse 210 diametral zueinander ausgebildet sind.

Um zumindest etwaig in dem Werkstück 150 vorhandene Metallobjekte, wie beispielsweise Nägel, Schrauben, Klammern, Klemmen oder dergleichen, leichter und mit weniger Verschleiß durchtrennen zu können, weist die erste Hauptschneide 214 des Holzbohrers 100 hier exemplarisch drei axial vom zweiten Ende 204 zurückspringende - der besseren zeichnerischen Übersicht halber hier nicht bezeichnete - Stufen auf. Daneben weist die erste Hauptschneide 214 des Kopfabschnitts 200 des Holzbohrers 100 bevorzugt eine erste radial innenliegende Hauptschneidenbasis 260 und entsprechend die zweite Hauptschneide 216 eine zweite radial innenliegende Hauptschneidenbasis 262 auf. Zwischen beiden Hauptschneidenbasen 260, 262 und der Längsmittelachse 210 besteht erfindungsgemäß ein Winkel, der kleiner als 90° ist, bevorzugt jedoch nur geringfügig kleiner. Hierbei sind die beiden Hauptschneidebasen 260, 262 des Kopfabschnitts 200 bevorzugt in Richtung des ersten Endes 202 geneigt.

Eine hier beispielhaft mittels des Holzbohrers 100 in das Werkstück 150 eingebrachte Bohrung 152 mit einer näherungsweise zylindrischen Innenwand 154 weist einen Innenradius von R_{B} auf. Bevorzugt korrespondiert der Innenradius R_{B} im Wesentlichen mit dem Außenradius R_{K} des Kopfabschnittes 200 des Holzbohrers 100. Ein Außenradius R_{H} beider Hauptschneidebasen 260, 262 beträgt vorzugsweise jeweils weniger als 60 %, bevorzugt weniger als 50 % des Außenradius des Kopfabschnitts 200. Weiterhin verfügt der Kopfabschnitt 200 bevorzugt über zwei Nebenschneiden, von denen hier lediglich eine Nebenschneide 220 zeichnerisch sichtbar und bezeichnet ist.

Bevorzugt weist der Holzbohrer 100 zumindest abschnittsweise hochfesten Kohlenstoffstahl, Schnellarbeitsstahl (HSS) und/oder Hartmetall auf. Gemäß einer Ausführungsform ist der Holzbohrer 100 aus Kohlenstoffstahl, insbesondere hochfestem Kohlenstoffstahl. gebildet. Alternativ können zumindest die Hauptschneiden 214, 216, bzw. deren Schneidkanten, mit einem Schnellarbeitsstahl (HSS) und/oder mit Wolframcarbid gebildet sein. Die Hauptschneiden 214, 216 sind bevorzugt derart ausgelegt, dass eine Fertigung mittels üblicher spangebender Verfahren und/oder durch bekannte Warm- oder Kaltumformprozesse wie Schmieden, Biegen oder Stanzen möglich ist.

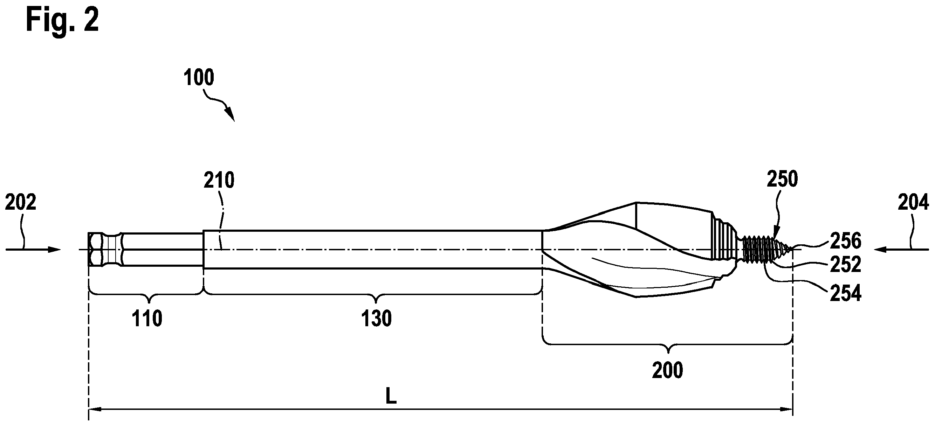

Fig. 2 zeigt den Holzbohrer 100 von Fig. 1 mit dem Spannabschnitt 110, dem Schaftabschnitt 130, sowie dem Kopfabschnitt 200. Der Kopfabschnitt 200 weist bevorzugt eine Zentriergeometrie 250 auf und ist rotationssymmetrisch zur Längsmittelachse 210 ausgeführt. Der Spannabschnitt 110 ist an dem ersten Ende 202 und der Kopfabschnitt 200 unter Einschluss des Zentrierabschnitts 250 ist an dem zweiten Ende 204 ausgeformt. Der beispielhaft madenförmige Zentrierabschnitt 250 verfügt bevorzugt über ein Gewinde 252 mit einem wendelförmig umlaufenden Gewindegang 254 sowie einer Zentrierspitze 256. Der Holzbohrer 100 weist illustrativ die axiale Gesamtlänge L von bis zu 600 mm auf, d.h. unter vollständigem Einschluss von Spann-, Schaft- und Kopfabschnitt 110, 130, 200.

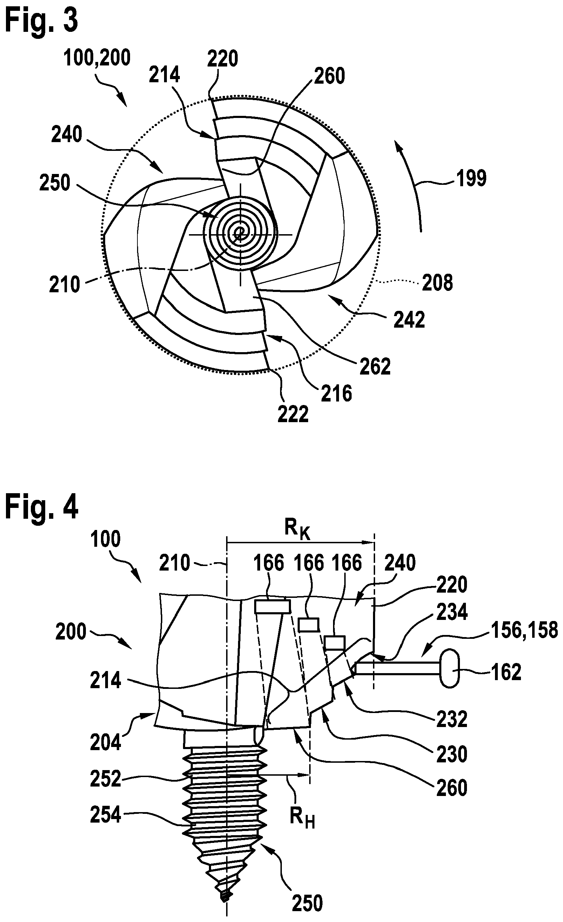

Fig. 3 zeigt den Holzbohrer 100 von Fig. 2, wobei der Kopfabschnitt 200 des Holzbohrers 100 eine im Wesentlichen kreisrunde Umfangskontur 208 aufweist. Die Umfangskontur 208 weist vorzugsweise im Bohr- bzw. Schneidbetrieb eine Drehrichtung 199 auf. Die mehrfach gestufte Schneidkante 214 mit der Hauptschneidebasis 260 sowie die mehrfach gestufte Schneidkante 216 mit der Hauptschneidebasis 262 sind exemplarisch rotationssymmetrisch zur Zentriergeometrie 250 und zur Längsmittelachse 210 ausgebildet. An die erste Hauptschneide 214 schließt sich eine im Bereich zur Zeichenebene ungefähr parallel zur Längsmittelachse 210 verlaufende Nebenschneide 220 an. Entsprechend schließt sich bevorzugt an die zweite Hauptschneide 216 eine Nebenschneide 222 an. Umfangsseitig zwischen den gestuften Hauptschneiden 214, 216 verlaufen schließlich die beiden gewendelten Spänenuten 240, 242.

Fig. 4 zeigt den Kopfabschnitt 200 des Holzbohrers 100 von Fig. 2 und verdeutlicht die Zentriergeometrie 250. Bevorzugt weist der Kopfabschnitt 200 am zweiten Ende 204 des Holzbohrers 100 die koaxial zur Längsmittelachse 210 ausgeformte Zentriergeometrie 250 mit dem Gewinde 252 auf. Das Gewinde 252 verfügt vorzugsweise über den gewendelten Gewindegang 254. Der Kopfabschnitt 200 des Holzbohrers 100 weist den Außenradius R_{K} auf. An dem Kopfabschnitt 200 sind ferner die Spänenut 240 sowie die Nebenschneide 220 ausgebildet. Die Hauptschneide 214 verfügt über die Hauptschneidebasis 260 sowie zumindest zwei, vorzugsweise drei axial jeweils in Bezug zum zweiten Ende 204 zurückspringende Stufen 230, 232, 234 zum bedarfsweise erforderlichen Durchtrennen eines im Werkstück befindlichen Metallobjekts 156, insbesondere in der Form eines Verbindungselements 158 und/oder Befestigungselements im Zuge des Bohrfortschritts. Die Hauptschneidebasis 260 weist den Außenradius R_{H} auf.

Das in dem hier nicht dargestellten Werkstück befindliche Metallobjekt 156, das hier lediglich exemplarisch als ein Verbindungselement 158 in der Form eines Nagels 162 dargestellt ist, wird erfindungsgemäß durch die Wirkung der mehrfach gestuften Hauptschneide 214 im Zuge des Bohrfortschritts sukzessive in kleine Metallfragmente 166 zerteilt bzw. zerlegt. Infolgedessen kann die Standzeit des Holzbohrers 100 im Vergleich zu vorbekannten Lösungen beträchtlich erhöht werden.

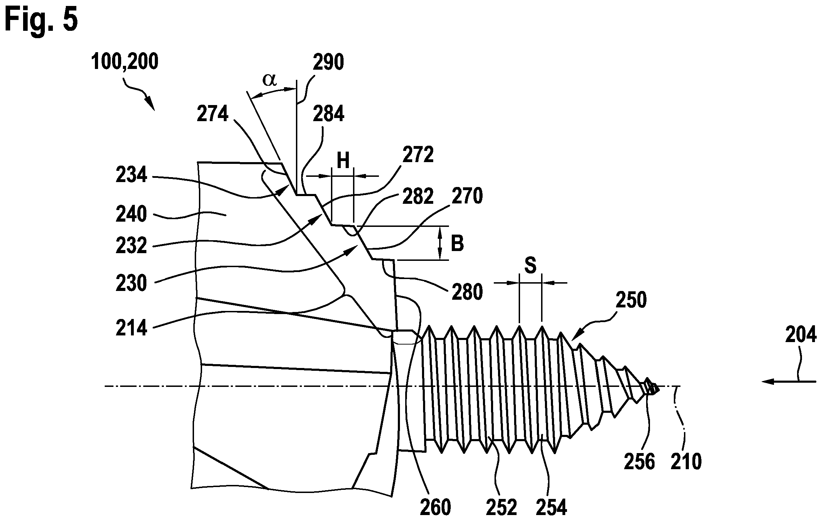

Fig. 5 zeigt den Kopfabschnitt 200 des Holzbohrers 100 von Fig. 4, der am zweiten Ende 204 des Holzbohrers 100 die Spänenut 240 und die Zentriergeometrie 250 mit dem Gewinde 252, dem Gewindegang 254 sowie der beispielhaft dornartigen Zentrierspitze 256 aufweist. Eine Steigung S des Gewindegangs 254 des Gewindes 252 liegt bevorzugt zwischen 1 mm und 2,5 mm. Koaxial zur Zentriergeometrie 250 verläuft die Längsmittelachse 210 des Holzbohrers 100.

Die Hauptschneide 214 verfügt bevorzugt über die Hauptschneidebasis 260 sowie die lediglich exemplarisch drei radial jeweils weiter außenliegenden und axial weiter zurückspringenden Stufen 230, 232, 234. Hierbei ist die Hauptschneide 214 in mindestens drei in axialer Richtung nach hinten bzw. zum ersten axialen Ende 202 hin versetze Abschnitte bzw. Stufen 230, 232, 234 unterteilt. Die erste Stufe 230 weist vorzugsweise eine Stufenbasis 270 und eine Stufenwand 280 auf. Entsprechend verfügt die zweite Stufe 232 bevorzugt über eine Stufenbasis 272 und eine Stufenwand 282. Die dritte Stufe 234 weist eine Stufenbasis 274 und eine Stufenwand 284 auf. Die mindestens zwei, illustrativ drei Stufen 230, 232, 234 der hier sichtbaren Hauptschneide 214 springen in Bezug zu der radial innenliegenden Hauptschneidebasis 260 jeweils um eine axiale Stufenhöhe H axial in Richtung des ersten Endes 202 des Holzbohrers 100 zurück. Eine radiale Stufenbreite B der Stufen 230, 232, 234 liegt jeweils zwischen 1 mm und 10 mm, vorzugsweise jedoch zwischen jeweils 2 mm und 5 mm.

Die Stufenwände 280, 282, 284 verlaufen illustrativ jeweils näherungsweise parallel zu der Längsmittelachse 210, während die Stufenbasen 270, 272, 274 jeweils um einen Stufenwinkel α in Bezug zu der Längsmittelachse 210 geneigt verlaufen. Der Winkel α ist hierbei zwischen einer Senkrechten 290 zur Längsmittelachse 210 sowie der jeweiligen Stufenbasis 270, 272, 274 der Stufen 230, 232, 234 definiert. Der Stufenwinkel α kann in einem Bereich zwischen 0° und 65° liegen, wobei ein Stufenwinkel α von etwa 40° bevorzugt ist.

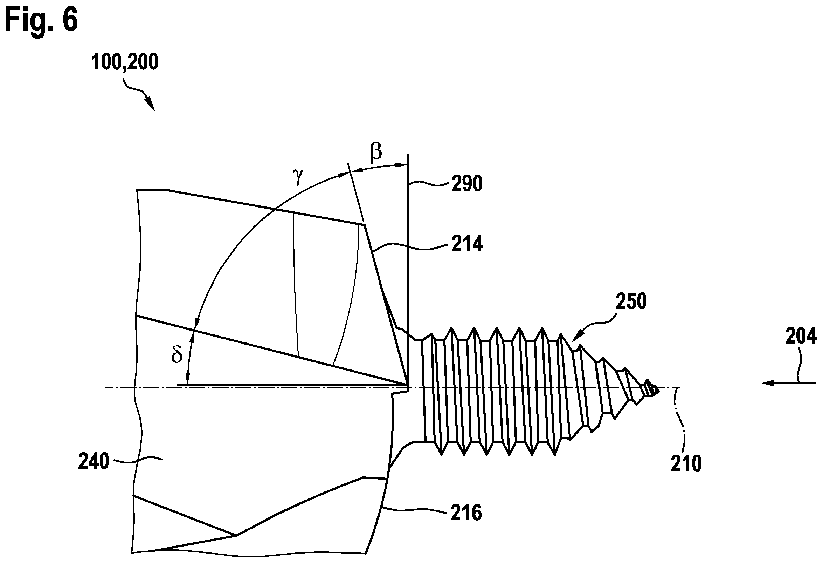

Fig. 6 zeigt den Kopfabschnitt 200 des Holzbohrers 100 von Fig. 5 und verdeutlicht die beiden Hauptschneiden 214, 216 und die Zentriergeometrie 250. Zwischen der mindestens einen Hauptschneide 214, 216 sowie der Senkrechten 290 zur Längsmittelachse 210 besteht ein Profilwinkel β, der vorzugsweise zwischen 10° und 30° beträgt. Zur Erzielung verbesserter Arbeitsergebnisse weist der Profilwinkel β vorzugsweise einen Wert zwischen 15° und 25° auf. Ein Keilwinkel γ der mindestens einen Hauptschneide 214, 216 liegt hier lediglich beispielhaft in einer Größenordnung von etwa 60°. Zwischen den bevorzugt zwei Spänenuten 240, 242 von Fig. 2, von denen hier lediglich die eine Spänenut 240 sichtbar ist, und der Längsmittelachse 210 besteht weiterhin jeweils ein Spanwinkel δ, der hier lediglich exemplarisch bei etwa 15° liegt.

## Patentansprüche

1. Holzbohrer (100) mit einem Spannabschnitt (110) zur drehfesten Verbindung mit einer Werkzeugaufnahme einer Handwerkzeugmaschine, sowie einem Kopfabschnitt (200), der mit einer Zentriergeometrie (250) versehen ist, wobei der Spannabschnitt (110) an einem werkstückabgewandten ersten Ende (202) und der Kopfabschnitt (200) an einem werkstückzugewandten zweiten Ende (204) des Holzbohrers (100) ausgebildet ist, wobei der Spannabschnitt (110) über einen Schaftabschnitt (130) mit dem Kopfabschnitt (200) verbunden ist, und wobei ein maximaler Außenradius (R_{K}) des Kopfabschnitts (200) größer als ein maximaler Außenradius (R_{S}) des Schaftabschnitts (130) ist, wobei der Kopfabschnitt (200) mindestens eine Hauptschneide (214, 216) mit mindestens zwei Stufen (230, 232, 234) zum Einbringen einer Bohrung (152) mit einem vorgegebenen Innenradius (R_{B}) in ein Werkstück (150) aufweist, und ein Außenradius (R_{H}) einer Hauptschneidebasis (260) weniger als 60 %eines Außenradius (RK) des Kopfabschnitts (200) beträgt, , **dadurch gekennzeichnet, dass** die Zentriergeometrie (250) schraubenartig mit einem spiralförmig umlaufenden Gewinde (252) mit einer Steigung (S) ausgebildet ist, wobei zwischen der Hauptschneidebasis (260) und einer Längsmittelachse (210) ein Winkel kleiner als 90° besteht und in Richtung des ersten Endes 202 geneigt ist.

2. Holzbohrer nach Anspruch 1, **dadurch gekennzeichnet, dass** der Kopfabschnitt (200) eine spiralförmig gewendelte Oberflächengeometrie (206) mit mindestens einer Spänenut (240, 242) und mit mindestens einer Nebenschneide (220, 222) aufweist.

3. Holzbohrer nach Anspruch 1 oder 2, **dadurch gekennzeichnet, dass** die mindestens zwei Stufen (230, 232, 234) der mindestens einen Hauptschneide (214, 216) in Bezug zu der radial innenliegenden Hauptschneidebasis (260) jeweils um eine Stufenhöhe (H) axial in Richtung des ersten Endes (202) des Holzbohrers (100) zurückspringen.

4. Holzbohrer nach Anspruch 3, **dadurch gekennzeichnet, dass** jede der mindestens zwei Stufen (230, 232, 234) der Hauptschneide (214, 216) eine radiale Stufenbreite (B) aufweist.

5. Holzbohrer nach Anspruch 4, **dadurch gekennzeichnet, dass** die radiale Stufenbreite (B) zwischen 1 mm und 10 mm, vorzugsweise zwischen 2 mm und 5 mm liegt.

6. Holzbohrer nach einem der vorhergehenden Ansprüche, **dadurch gekennzeichnet, dass** jede Stufenbasis (270, 272, 274) der mindestens zwei Stufen (230, 232, 234) jeweils um einen Stufenwinkel (α) senkrecht zur Längsmittelachse (210) in Richtung des ersten Endes (202) des Holzbohrers (100) geneigt ist.

7. Holzbohrer nach Anspruch 6, **dadurch gekennzeichnet, dass** der Stufenwinkel (α) zwischen 0° und 65°, vorzugsweise bei etwa 40° liegt.

8. Holzbohrer nach einem der vorhergehenden Ansprüche, **dadurch gekennzeichnet, dass** zwischen der mindestens einen Hauptschneide (214, 216) und senkrecht zur Längsmittelachse (210) ein Profilwinkel (β) besteht, der zwischen 10° und 30° beträgt, insbesondere zwischen 15° und 25°.

9. Holzbohrer nach einem der vorhergehenden Ansprüche, **dadurch gekennzeichnet, dass** ein Keilwinkel (γ) der mindestens einen Hauptschneide (214, 216) ungefähr 60° beträgt.

10. Holzbohrer nach einem der vorhergehenden Ansprüche, **dadurch gekennzeichnet, dass** zwischen der mindestens einen Spänenut (240, 242) und der Längsmittelachse (210) in etwa ein Spanwinkel (δ) besteht.

11. Holzbohrer nach Anspruch 1, **dadurch gekennzeichnet, dass** die Steigung (S) des Gewindes (252) zwischen 1 mm und 2,5 mm liegt.

12. Holzbohrer nach einem der vorhergehenden Ansprüche, **dadurch gekennzeichnet, dass** der Holzbohrer (100) mit einem hochfesten Kohlenstoffstahl gebildet ist.

## Claims

1. Wood drill bit (100), having a clamping portion (110) for co-rotational connection to a tool receiver of a hand-held power tool, and a head portion (200) provided with a centring geometry (250), wherein the clamping portion (110) is realized at a first end (202) of the wood drill bit (100) that faces away from the workpiece and the head portion (200) is realized at a second end (204) that faces toward the workpiece, wherein the clamping portion (110) is connected to the head portion (200) via a shank portion (130), and wherein a maximum outer radius (R_{K}) of the head portion (200) is greater than a maximum outer radius (R_{S}) of the shank portion (130), wherein the head portion (200) has at least one main cutting edge (214, 216) that comprises at least two steps (230, 232, 234) for drilling a hole (152) of a predefined inner radius (R_{B}) into a workpiece (150), and an outer radius (R_{H}) of a main cutting edge base (260) is less than 60 % of an outer radius (RK) of the head portion (200), **characterized in that** the centring geometry (250) is designed in the manner of a screw having a helically encircling thread (252) that has a pitch (S), wherein there is an angle of less than 90°, inclined in the direction of the first end (202), between the main cutting edge base (260) and a longitudinal central axis (210).

2. Wood drill bit according to Claim 1, **characterized in that** the head portion (200) has a helically coiled surface geometry (206), having at least one chip groove (240, 242) and having at least one minor cutting edge (220, 222).

3. Wood drill bit according to Claim 1 or 2, **characterized in that** the at least two steps (230, 232, 234) of the at least one main cutting edge (214, 216) are set back axially by one step height (H) with respect to the radially inner main cutting edge base (260) in the direction of the first end (202) of the wood drill bit (100).

4. Wood drill bit according to Claim 3, **characterized in that** each of the at least two steps (230, 232, 234) of the main cutting edge (214, 216) has a radial step width (B).

5. Wood drill bit according to Claim 4, **characterized in that** the radial step width (B) is between 1 mm and 10 mm, preferably between 2 mm and 5 mm.

6. Wood drill bit according to one of the preceding claims, **characterized in that** each step base (270, 272, 274) of the at least two steps (230, 232, 234) is inclined in each case by a step angle (α) perpendicularly to the longitudinal central axis (210) in the direction of the first end (202) of the wood drill bit (100).

7. Wood drill bit according to Claim 6, **characterized in that** the step angle (α) is between 0° and 65°, preferably approximately 40°.

8. Wood drill bit according to one of the preceding claims, **characterized in that** between the at least one main cutting edge (214, 216) and perpendicular to the longitudinal central axis (210) there is a profile angle (β) that is between 10° and 30°, in particular between 15° and 25°.

9. Wood drill bit according to one of the preceding claims, **characterized in that** a wedge angle (γ) of the at least one main cutting edge (214, 216) is approximately 60°.

10. Wood drill bit according to one of the preceding claims, **characterized in that** there is some rake angle (δ) between the at least one chip groove (240, 242) and the longitudinal central axis (210).

11. Wood drill bit according to Claim 1, **characterized in that** the pitch (S) of the thread (252) is between 1 mm and 2.5 mm.

12. Wood drill bit according to one of the preceding claims, **characterized in that** the wood drill bit (100) is formed from a high-strength carbon steel.

## Revendications

1. Foret à bois (100) avec une section de serrage (110) pour une liaison solidaire en rotation à un logement d'outil d'une machine-outil à main, et avec une section de tête (200), qui est pourvue d'une géométrie de centrage (250), la section de serrage (110) étant formée sur une première extrémité (202) opposée à la pièce et la section de tête (200) étant formée sur une seconde extrémité (204) du foret à bois (100) tournée vers la pièce, la section de serrage (110) étant reliée à la section de tête (200) par une section de tige (130), et un rayon extérieur maximal (R_{K}) de la section de tête (200) étant supérieur à un rayon extérieur maximal (R_{S}) de la section de tige (130), la section de tête (200) comportant au moins un tranchant principal (214, 216) avec au moins deux étages (230, 232, 234) pour pratiquer un alésage (152) avec un rayon intérieur (R_{B}) prédéfini dans une pièce (150), et un rayon extérieur (R_{H}) d'une base de tranchant principale (260) étant inférieur à 60 % d'un rayon extérieur (RK) de la section de tête (200), **caractérisé en ce que** la géométrie de centrage (250) est formée hélicoïdalement avec un filetage (252) s'étendant en forme de spirale avec un pas (S), un angle inférieur à 90° étant présent entre la base (260) de tranchant principal et un axe central longitudinal (210) et étant incliné en direction de la première extrémité (202).

2. Foret à bois selon la revendication 1, **caractérisé en ce que** la section de tête (200) présente une géométrie de surface (206) enroulée en spirale avec au moins une rainure de rognure (240, 242) et avec au moins un tranchant secondaire (220, 222).

3. Foret à bois selon la revendication 1 ou 2, **caractérisé en ce que** les au moins deux étages (230, 232, 234) de l'au moins un tranchant principal (214, 216) reculent axialement en direction de la première extrémité (202) du foret à bois (100) par rapport à la base (260) de tranchant principal radialement intérieure à chaque fois d'une hauteur d'étage (H).

4. Foret à bois selon la revendication 3, **caractérisé en ce que** chacun des au moins deux étages (230, 232, 234) du tranchant principal (214, 216) présente une largeur (B) d'étage radiale.

5. Foret à bois selon la revendication 4, **caractérisé en ce que** la largeur (B) d'étage radiale est comprise entre 1 mm et 10 mm, de préférence entre 2 mm et 5 mm.

6. Foret à bois selon l'une des revendications précédentes, **caractérisé en ce que** chaque base (270, 272, 274) d'étage des au moins deux étages (230, 232, 234) est inclinée d'un angle d'étage (α) perpendiculairement à l'axe médian longitudinal (210) en direction de la première extrémité (202) du foret à bois (100).

7. Foret à bois selon la revendication 6, **caractérisé en ce que** l'angle d'étage (α) est compris entre 0° et 65°, de préférence est d'environ 40°.

8. Foret à bois selon l'une des revendications précédentes, **caractérisé en ce qu'**il existe entre l'au moins un tranchant principal (214, 216) et perpendiculairement à l'axe médian longitudinal (210), un angle de profil (β) qui est compris entre 10° et 30°, en particulier entre 15° et 25°.

9. Foret à bois selon l'une des revendications précédentes, **caractérisé en ce qu'**un angle de coin (γ) de l'au moins un tranchant principal (214, 216) est d'environ 60°.

10. Foret à bois selon l'une des revendications précédentes, **caractérisé en ce qu'**il existe approximativement un angle de coupe (δ) entre l'au moins une rainure de rognure (240, 242) et l'axe médian longitudinal (210).

11. Foret à bois selon la revendication 1, **caractérisé en ce que** le pas (S) du filetage (252) est compris entre 1 mm et 2,5 mm.

12. Foret à bois selon l'une des revendications précédentes, **caractérisé en ce que** le foret à bois (100) est formé avec un acier au carbone hautement résistant.
